# EUROPEAN PATENT SPECIFICATION

(11) **EP 3 947 929 B1**
(45) Date of publication and mention of the grant of the patent: **24.01.2024**
(21) Application number: 20782141.4
(22) Date of filing: 04.04.2020
(51) Int. Cl.: F01N 3/10, F01N 13/00, F01P 1/02, F01P 1/06, F01P 5/02

(54) **A DISCHARGE SYSTEM AND MULTI WHEELED VEHICLE THEREOF**
ENTLADUNGSSYSTEM UND MEHRRÄDRIGES FAHRZEUG DAVON
SYSTÈME D'ÉVACUATION ET VÉHICULE À ROUES MULTIPLES ASSOCIÉ

(30) Priority: 04.04.2019 IN 201941013536
(43) Date of publication of application: 09.02.2022
(73) Proprietor: TVS Motor Company Limited, Chennai 600006 (IN)
(72) Inventor: SUBRAMONIAM, Chithambaram, Chennai 600006 (IN); KESAVAN, Vigneshwara Raja, Chennai 600006 (IN); VETHA HAVYA, Suvanam Venkata Sai, Chennai 600006 (IN); SUBBIAH, Sankari, Chennai 600006 (IN)
(74) Representative: Patentanwaltskanzlei Matschnig & Forsthuber OG
(86) International application number: PCT/IN2020/050328
(87) International publication number: WO 2020/202219

(56) References cited:
- EP-A1- 3 239 505
- EP-B1- 2 141 330
- WO-A1-2009/041028
- CN-Y- 2 861 503
- JP-A- 2006 226 262
- US-A1- 2019 085 744

## Description

### TECHNICAL FIELD

The present subject matter, in general, relates to a motor vehicle including an internal combustion engine and, in particular related to a combustion gas discharge system for the internal combustion engine of the motor vehicle.

### BACKGROUND

In the last few decades, automobile industry has shown a remarkable growth and development, in terms of technology as well as sales. Due to consistent advancement in technology, motor vehicles, such as motorcycles, scooters and lightweight scooters collectively referred as two-wheelers, have succeeded in maintaining their popularity among different sections of society due to their compact size and ease of operation. Different sections of society, based on their requirement, utilize the two-wheeled vehicles for various purposes, such as a recreational activity, a means of transportation, and for sports activities. As a result, it becomes pertinent for the two-wheeler automobile industry to constantly develop and modify the components of the two-wheeled vehicles to suit requirements of different riders.

In accordance with the same ideology, various systems are included in the vehicle to provide rich user experience. This includes provision of various mechanical, electronic, and electrical systems. All, these systems are to be accommodated within available space of the vehicle. In addition, there is a need for the motor vehicles transmitting exhaust gases into the atmosphere to be less polluting.

Generally, two-wheeled vehicles are provided with a combusted gas discharge system that includes piping to guide gases from the IC engine. Also, the discharge system includes a gas treatment device for the treatment of the gas. The treated gases are transmitted to the atmosphere.

### BRIEF DESCRIPTION OF THE DRAWINGS

The detailed description is described with reference to the accompanying figures. The same numbers are used throughout the drawings to reference like features and components.
Fig. 1 (a) depicts a right side view of an exemplary two-wheeled vehicle, in accordance with an embodiment of the present subject matter.
Fig. 1 (b) illustrates a front perspective view of the power unit, in accordance with the embodiment as depicted in Fig. 1 (a).
Fig. 2 (a) depicts an enlarged side view of a rear portion of the vehicle, in accordance with the embodiment of Fig. 1 (a).
Fig. 2 (b) depicts an enlarged side view of the discharge system, in accordance with the embodiment as depicted in Fig. 2 (a).
Fig. 3 depicts side view of the discharge system, in accordance with another embodiment of the present subject matter.
Fig. 4 (a) depicts a right side view of another vehicle, in accordance with another embodiment of the present subject matter.
Fig. 4 (b) depicts enlarged view of the discharge system employed on the vehicle, in accordance with another embodiment of Fig. 4 (a).

### DETAILED DESCRIPTION

Conventionally, two-wheeled vehicles are provided with drive means including the internal combustion (IC) engine or a traction motor. Also, the vehicle includes various sub-systems like the air induction system that works in conjunction with the fuel supply system like carburetor or fuel injector. Air-fuel mixture is supplied to the IC engine for combustion, which produces desired power and torque that is transferred to at least one wheel of the vehicle. Further, the gas discharge system includes discharge pipe that transmits the gases generated during combustion process to a muffler. Generally, the gases that are emitted include harmful components including total hydrocarbons (THC), carbon monoxide (CO), and nitrogen oxides (NOx). There is a need for treating the harmful components prior to emitting the gases into the atmosphere through the muffler. Typically, the gas treatment device is used for the treatment of the aforementioned harmful components.

Thus, the gas treatment device is a critical element of the discharge system, which helps in treating the harmful components. Therefore, the gas treatment device should be having higher conversion efficiency. To this end, the conversion efficiency of the gas treatment device depends on many factors including size/volume of the gas treatment device, or location of the gas treatment device in the discharge system. However, in two-wheelers there are limitations in accommodating the gas treatment device due to layout constraints thereof. Also, the challenge lies in increasing the size/volume of the gas treatment device that would improve the efficiency of the gas treatment which contradicts the compact trim requirements of a saddle type vehicle. Especially, in two-wheeled vehicles with swinging type IC engine, the IC engine is substantially at a lower portion of the vehicle. Also, the discharge pipe is also extending from the exhaust port to the muffler, which is disposed adjacent to the rear wheel. Therefore, the length of the discharge pipe is shorter. In such vehicles, while providing a gas treatment device, there is also a need for eliminating effect of backpressure on the IC engine. As the back pressure would affect the performance of the engine.

US2019/085744A1 discloses an exhaust muffler includes a first muffler section having a tubular member made up of an inner pipe to which an exhaust pipe is connected and an outer pipe covering the inner pipe, and a connector connecting the tubular member and a second muffler section to each other, and the second muffler section having an outer shell, a first partition wall, a second partition wall, and a third partition wall. Exhaust gases delivered from the exhaust pipe are discharged from the first muffler section and the second muffler section out of the exhaust muffler. The second muffler section has a cross-sectional area larger than a cross-sectional area of the tubular member. The upstream exhaust pipe houses therein a catalytic device for purifying exhaust gases. The exhaust device includes the exhaust pipe connected to a rear end of the exhaust manifold for receiving burned exhaust gases from the internal combustion engine E.

Further, WO2009/041028A1 discloses a straddle riding-type vehicle having an internal combustion engine where combustion is taken place at an air-fuel ratio less than a theoretical air-fuel ratio, wherein the purification ratio of NOx is improved. The exhaust gas purification system includes an engine and an exhaust pipe connected to an exhaust port of the engine. In the exhaust pipe, a first catalyst and a second catalyst arranged downstream of the first catalyst are provided, and a first catalyst of the exhaust pipe and a second air introduction pipe for introducing secondary air is connected to a portion between the first catalyst and the second catalyst. Moreover, in EP2141330B1, which discloses an exhaust pipe into which an exhaust gas from a single cylinder engine flow is provided with a three-way catalyst. The exhaust pipe includes a first pipe inserted into a muffler and a second pipe extending toward the downstream side from the first pipe within the muffler. A narrowed portion having an inner diameter smaller than that of a cylindrical portion of the first pipe is provided in a downstream end opening of the first pipe. The narrowed portion is inserted into an upstream end opening of the second pipe.

In JP2006226262A, an exhaust catalyst is arranged in a muffler connected with the rear end of the exhaust pipe. When the exhaust gas temperature is a low state when starting the engine, the exhaust gas temperature is raised by heating the metallic pipe parts and by heat of the engine, to activate the exhaust catalyst. When the exhaust gas temperature becomes sufficiently high, the first and second air introducing pipes are forcibly cooled by cooling air sent into the shroud to prevent the high temperature rise in the first and second control valves.

In another prior art, EP3239505A1, an air-cooled engine unit is provided, in which deterioration of a catalyst is minimized even when the catalyst is provided close to an engine main body. An air-cooled engine unit has a compression ratio of 10 or higher, and includes a close-to-combustion-chamber catalyst provided in an exhaust passage member. A path length of a first portion of the exhaust passage member , the first portion being from an exhaust port to the catalyst, is shorter than a path length of a second portion of the exhaust passage member, the second portion being from the catalyst to an atmosphere discharge port.

For example, in the step-through type vehicle, the upstream portion of the discharge pipe is in proximity to the cooling system of the vehicle. Also, the pillion footrest is disposed above the exhaust portion. Therefore, due to the exothermic reaction at the gas treatment device, heat is dissipated in the region in proximity to the gas treatment device. The dissipated heat is directed towards the intake side of the cooling system and towards the pillion footrest, which would affect the cooling of the IC engine and also causing discomfort to the rider, respectively.

Thus, there is a need for addressing the aforementioned and other problems in the prior art. Consequently, the present subject matter provides a discharge system for a motor vehicle that addresses the aforementioned and other problems in the prior art.

Hence, the present subject matter provides a discharge system including a discharge pipe having a device housing capable of accommodating a gas treatment device disposed at a downstream end portion of the discharge pipe and ahead of the muffler.

The discharge system further may include one or more gas treatment device disposed about the discharge pipe or within the muffler for treating the exhaust gas discharged from the engine.

It is an aspect of the present subject matter that the discharge pipe includes a device housing disposed ahead of the connecting portion between the muffler and the discharge pipe. The device housing is at the downstream end portion of the discharge pipe. It is an advantage of the present subject matter that the device housing is capable of accommodating a gas treatment device and subject to early light off whereby emissions are reduced even during the cold cycle or cold start conditions.

Further, the discharge system enables accommodating a secondary gas treatment device disposed in the muffler or ahead of the device housing thereby providing improved volume for reducing the emissions during transient stage of the IC engine operation and during operation of the vehicle & well as improving layout clearance with the ground in a dynamic condition enabling a trim vehicle configuration.

It is another aspect that the primary gas treatment device being disposed substantially away from the exhaust port reduces or eliminates formation of back pressure and at the same time providing optimal time for light off. Preferably, the primary gas treatment device is disposed at distance of at least 6 times the port diameter of the exhaust port or the major cross sectional dimension of the exhaust port, wherein the length of the discharge pipe taken is in terms of true length.

It is an additional aspect that the a secondary gas treatment device disposed within the muffler is disposed at a distance of at least 20 mm from the primary gas treatment device disposed in the device housing, whereby the conversion efficiency is retained by retaining the treatment devices in proximity.

It is another feature the present subject matter enables the device housing to be disposed substantially upward from the ground so as to protect the device housing from any damage due to stones on bumpy roads thereby protecting the gas treatment device disposed therein from failure or damage.

It is yet another feature that the device housing is extending rearward from the rider foot rest and is disposed substantially rearward and downward to the pillion foot rest that is positioned at lateral sides of the front portion of the rear cover assembly. It is advantage that the heat from the primary gas treatment device does not reach pillion foot or rider foot.

Further, the device housing is having a long axis disposed at a pre-determined angle with an imaginary line passing through a rider footrest and a pillion footrest of the motor vehicle. Therefore, during operation of the vehicle heat discharged from the device housing is passing rearward and the imaginary line is diverging from the long axis when moving rearward of the vehicle thereby keeping the rider & / or pillion foot rest away from heat.

It is further advantage that during operation of the vehicle, the direction of flow of air from the primary gas treatment device is rearward and the probability of hot air reaching cooling device is reduced. For example, a cooling device like a cooling cowl assembly is having a lateral side opening for receiving air and the device housing is disposed rearward to the input of the cooling cowl assembly. It is additional advantage that the engine cooling is improved as the heat from the gas treatment device is avoided.

Further aspect being, the device housing is disposed at least at a distance of six times of the exhaust port diameter or the major cross sectional dimension of the exhaust port, such that substantial space is provided to accommodate a port portion. The port portion is capable of supporting a SAI connection, an EGR connection, a lambda sensor, or an additional filter connection thereof. Thus it is advantage the condition of engine operation prior to treatment of gases can be identified.

These and other advantages of the present subject matter would be described in greater detail in conjunction with the figures in the following description.

Arrows wherever provided in the top right corner in the drawings depicts direction with respect to the vehicle, wherein an arrow F denotes front direction, an arrow R indicates rear direction, an arrow UP denotes upward direction, an arrow DW denotes downward direction, an arrow RH denotes right side, and an arrow LH denotes left side.

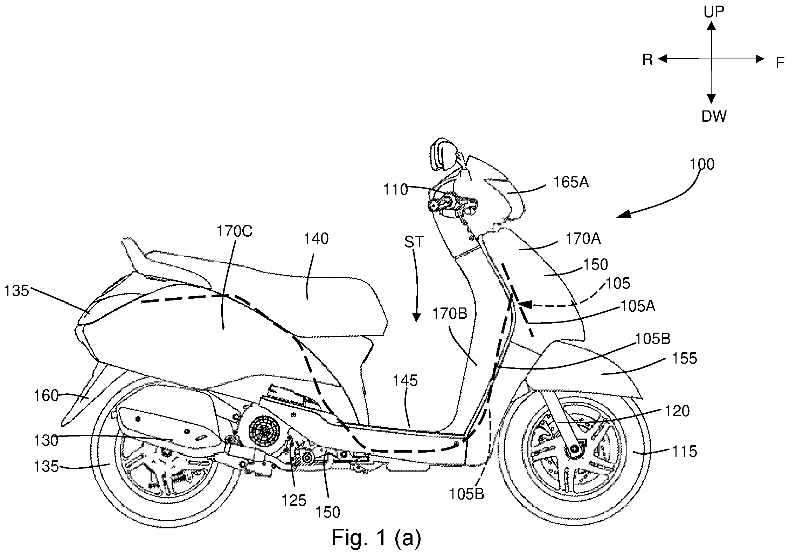

Fig. 1 (a) depicts an exemplary two-wheeled vehicle 100, in accordance with an embodiment of the present subject matter. The vehicle 100 has a frame member 105 that includes a head tube 105A, a main frame 105B extending rearwardly downward from the head tube 105A. The main frame 105B includes a main tube (not shown), and a pair of rear tubes (not shown) extending inclinedly rearward from a rear portion of the main tube. In the present embodiment, the vehicle includes a step-through portion ST defined by the frame member of the vehicle 100. However, the aspects of the present subject matter are not limited to the depicted layout of the vehicle 100.

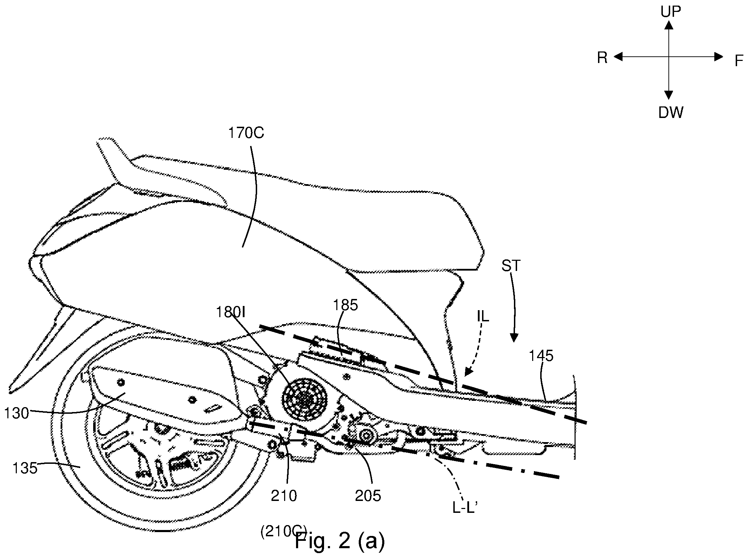

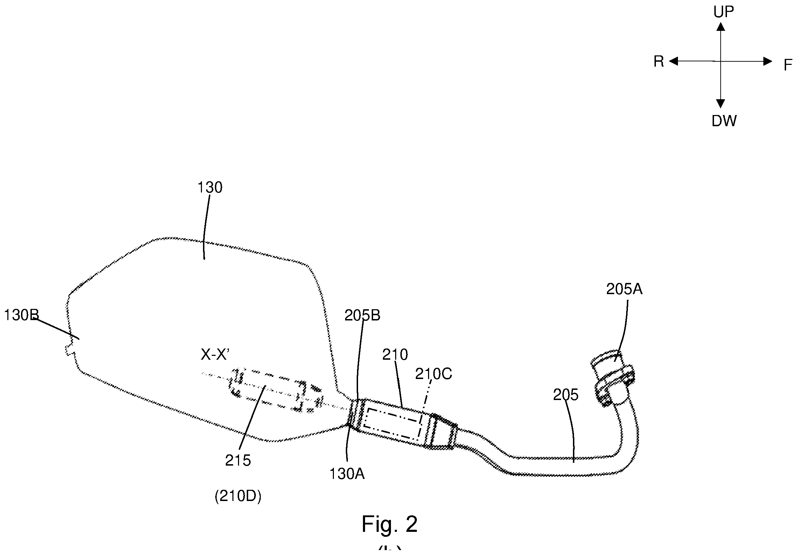

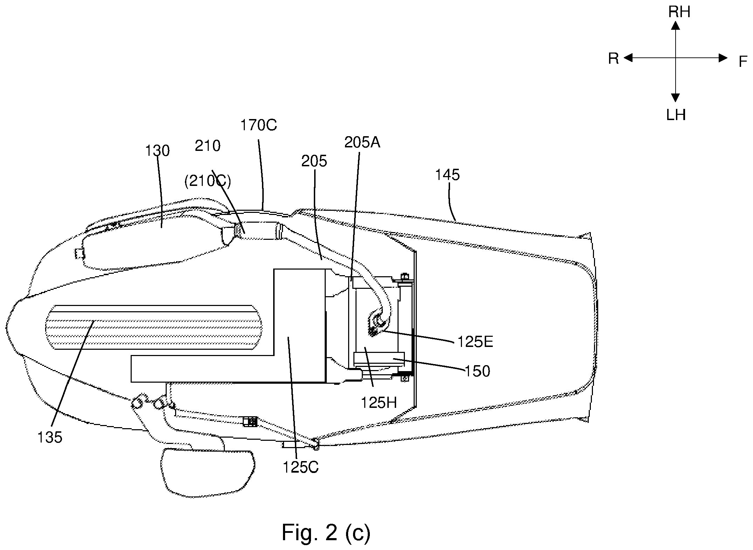

Further, a handlebar assembly 110 is connected to a front wheel 115 through one or more front suspension(s) 120. A steering shaft (not shown) connects the handlebar assembly 110 to the front suspension(s) 120 and the steering shaft is rotatably journaled about the head tube 105A. A power unit 125 including at least one of an internal combustion (IC) is mounted to the frame member 105. The power unit 125 may include a traction motor either hub mounted or is mounted adjacent to the engine. The power unit 125 is disposed below at least a portion of the main frame 105B. In the present embodiment, the power unit includes the IC engine 125 forwardly inclined i.e. a piston axis of the IC engine is forwardly inclined. Hereinafter, the terms power unit 125 and IC engine 125 are interchangeably used. The power unit 125 is functionally connected to a rear wheel 130 through a transmission system (not shown). The transmission system includes a continuously variable transmission (CVT) or a fixed gear ratio transmission or automatic-manual transmission (AMT) controlled by an AMT control unit. The vehicle 100 includes an air induction system (not shown) that provides air to the air-fuel mixture. Similarly, a discharge system 200 (shown in Fig 2) helps in dissipation of burnt gasses from the IC engine 125, the discharge system includes a muffler 135 mounted to the vehicle 100.

Further, the rear wheel 135 is connected to the frame member 105 through one or more rear suspension(s) (not shown). The power unit 125 is swingably mounted to the frame member 105 through a toggle link 150 or the like. A seat assembly 140 is supported by the frame member 105 and is disposed rearward to the step-through portion ST.

Further, the vehicle 100 includes a front fender 155 covering at least a portion of the front wheel 115. In the present embodiment, a floorboard 145 is disposed at a step-through portion ST and is supported by the main tube 105B and a pair of floor frames (not shown). The user can operate the vehicle 100 by resting feet on the floorboard 145, in a sitting position. In an embodiment, a fuel tank (not shown) is disposed below the seat assembly 140 and behind the utility box. A rear fender 160 is covering at least a portion of the rear wheel 135. The vehicle 100 comprises of plurality of electrical/electronic components including a headlight 165A, a tail light (not shown), a battery (not shown), a transistor controlled ignition (TCI) unit (not shown), an alternator (not shown), a starter motor (not shown). Further, the vehicle 100 may include a synchronous braking system, an anti-lock braking system.

The vehicle 100 includes plurality of panels 170A, 170B, and 170C that include a front panel 170A disposed in an anterior portion of the head tube 105A, a leg shield 170B is disposed in a posterior portion of the head tube 105A. A rear panel assembly 170C includes a right side panel and a left side panel disposed below the seat assembly 140 and extending rearward from a rear portion of the floorboard 145 towards a rear portion of the vehicle 100. The rear panel assembly 170C encloses the utility box. Also, the rear panel assembly 170C partially encloses the power unit 125. The power unit including an IC engine 125 includes an air intake system (not shown), an air fuel supply system (not shown) that are coupled to an intake side of the IC engine 125. Also, the muffler 130 of the discharge system is coupled to exhaust side of the IC engine 125 and in an implementation the muffler 130 extends towards one lateral side of the vehicle 100. Also, the power unit 125 may include a traction motor (now shown) whereby the vehicle can be operated as a hybrid vehicle by selective operation of the IC engine and traction motor. In one embodiment, the traction motor is hub mounted to the rear wheel 130. In one other embodiment, the traction motor may be swingably connected the frame member 105.

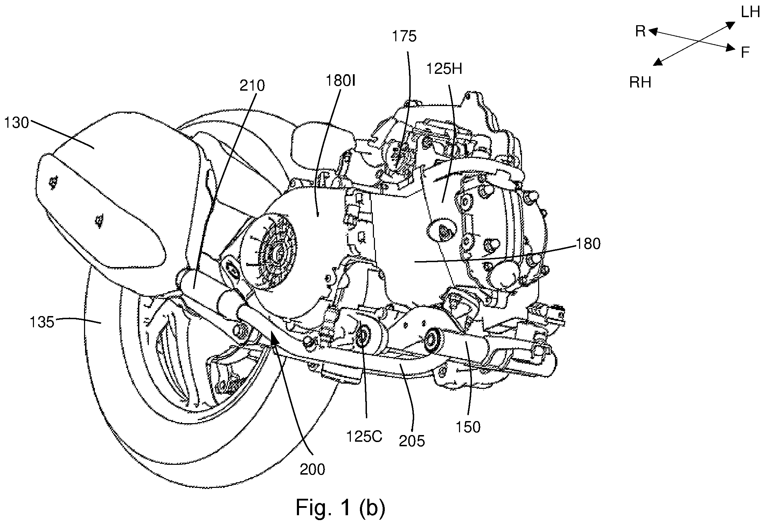

Fig. 1 (b) illustrates a front perspective view of the power unit, in accordance with the embodiment as depicted in Fig. 1 (a). Fig. 1 (c) depicts an enlarged side view of the discharge system, in accordance with the embodiment as depicted in Fig. 1 (b). The IC engine/power unit 125 is disposed such that the piston axis of the IC engine 125 is forwardly inclined. In the present implementation, the IC engine 125 is swinging type that is swingably connected to the frame member 105 the vehicle 100. The IC engine 125 includes a cylinder portion defined by a cylinder block (not shown). The cylinder block is mounted to a crankcase 125C of the engine 125. In the crankcase 125C is connected to the frame member 105 of the vehicle 100. In the present implementation, the crankcase 125C is connected to the frame member 105 using a toggle link 150. The toggle link 150 is connected to lower portion of the crankcase 125C and through the toggle link the 150 the power unit 125 is swingably connected to the frame member 105.

Further, the cylinder block support a cylinder head 125H that includes a valve assembly. The valve assembly enables entry of air-fuel mixture into the cylinder, where combustion of air-fuel mixture takes place. Subsequently, the valve assembly enables dissipation of the burnt gases from the cylinder. The air induction system along with air fuel supply system is connected to one side wall of the cylinder head 125H that is provided with an input port (not shown). Further, the IC engine 125 includes an exhaust port provided on other side wall of the cylinder head 125H. In the present implementation, the input port is provided on the upper side wall of the cylinder head 125H and an air fuel regulating unit, which in the present embodiment is a carburetor 175 is connected to the input port. The exhaust port 125E (shown in Fig. 2 (c)) is provided on bottom side wall of the cylinder head 125H and the discharge system 200 is connected to the exhaust port 125E. The IC engine 125 includes a cooling cowl assembly 180 that annularly encloses at least a portion of the cylinder head 125H. The cooling cowl assembly 180 includes an inlet 1801 and a cooling fan is coupled to a crankshaft of the engine 125. The cooling fan has an axis of rotation coinciding with the axis of rotation of the crankshaft. In another implementation, an electric fan is provided instead of a mechanical cooling fan connected to the crankshaft. The cooling fan draws atmospheric air into the cooling cowl assembly 180 for cooling the IC engine 125. The atmospheric air is drawn from the inlet 1801 provided on the lateral side of the cooling cowl assembly 180. This cooling cowl assembly 180 enables cooling of the IC engine 125 thereby improving the performance of the engine 125.

The discharge system 200 includes a discharge pipe 205 that connects the cylinder head 125H to the muffler 130. In the present implementation, the muffler 130 is disposed laterally adjacent to the rear wheel 155. An upstream end portion 205A (shown in Fig 2(b)) of the discharge pipe 205 is connected to the exhaust port 125E of the cylinder head 125H and the upstream end portion passes through the toggle link 150, which includes a gap. In one implementation, the discharge pipe 205 extends downward from the exhaust port 125E through the gap in the toggle link 150 and extends laterally sideward towards the muffler 130 rearward to the IC engine 125 and adjacent to the rear wheel 135. In an embodiment, the gas treatment device 210C is disposed adjacent to the rear wheel 135 and is connected to the exhaust port 125E through the discharge pipe (205). The gas treatment device 210C is disposed substantially rearward to the toggle link (150), such that the gas treatment device 210C is disposed at an optimal distance from the exhaust port 125E.

Fig. 2 (a) depicts an enlarged view of the discharge system 200, in accordance with the embodiment of Fig. 1 (b). Fig. 2 (b) enlarged view of the discharge system, in accordance with the embodiment of Fig. 2 (a). The discharge pipe 205 includes a device housing 210 disposed ahead of the connecting portion between the muffler 130 and the discharge pipe 205. The connecting portion is between inlet portion 130A (shown in Fig 2(b)) of the muffler 130 and a downstream end portion 205B of the discharge pipe 205. The device housing 210 is capable of accommodating a gas treatment device 210C (as shown in Fig. 2 (b)) therein. The gas treatment device 210C, which is hereinafter primary gas treatment device 210C for brevity, is disposed substantially away from the exhaust port 125E of the IC engine 125. In one embodiment, a secondary gas treatment device 215 is disposed in the muffler 130 therein for further treatment of gas. It is an advantage of the present subject matter that the primary gas treatment device 210C is subject to early light off whereby emissions are reduced even during the cold cycle or cold start conditions. Further, the secondary gas treatment device is disposed in the muffler 130 provides improved volume for reducing the emissions during transient stage of the IC engine 125 operation.

Furthermore, the present subject matter eludes formation of back pressure, which if formed, affects the performance of the IC engine 125. The primary gas treatment device 210C being disposed substantially away from the exhaust port reduces or eliminates formation of back pressure. Preferably, the primary gas treatment device 210C is disposed at distance of 6 times the port diameter or major cross-sectional dimension of the exhaust port, wherein the length of the discharge pipe 205 taken is in terms of true length. This provides the primary gas treatment device 210C at substantial distance from the exhaust port whereby the early light off is achieved and at the same time the back pressure is eluded.

The secondary gas treatment device 215 disposed within the muffler 150 is at a distance of at least 20 mm from the primary gas treatment device 210C whereby the conversion efficiency is retained. Further, in one implementation, the primary gas treatment device 210C and the secondary gas treatment device 215 are disposed along a same axis X-X' that is along the direction of flow of the exhaust gas from the discharge pipe 205 to the muffler 130.

Further, the secondary gas treatment device 215 has any known regular geometric shape or irregular shape. Preferably, the gas treatment device is provided with an oval or circular shape.

Further, Fig. 2 (a) depicts the device housing 210 disposed about the discharge pipe 205 and positioned at a downstream portion 205B of the discharge pipe 205 and ahead of the muffler 130 is disposed substantially upward from the ground so as to protect the device housing 210 from any damage due to stones on bumpy roads. Further, the device housing 210 is disposed substantially rearward and downward to the pillion foot rest 185 that is positioned at lateral sides of the front portion of the rear cover assembly 170C. Therefore, the heat from the primary gas treatment device 210/210C does not reach pillion foot or rider foot. The device housing 210 is having a long axis L-L' disposed at a pre-determined angle with an imaginary line IL passing through a rider footrest 145 and a pillion footrest 185 of the motor vehicle 100. In a preferred implementation, the angle between the imaginary line IL and the axis X-X' is an acute angle. Therefore, during operation of the vehicle 100 the heat discharged from the device housing 210 is passing rearward and the pillion imaginary line IL is diverging from the long axis L-L' of the device housing 210 whereby the footrest even though disposed rearward to the device housing 210 is substantially away from the convective heat.

In addition, the device housing 210C is disposed and extends rearward with respect to the axis of cooling fan inlet 1801. Thus, the heat dissipated due to exothermic reaction at the primary gas treatment device 210C does not affect the cooling of the IC engine 125. As during operation of the vehicle 100, the direction of flow of air of air from the primary gas treatment device 210 is rearward and the probability of hot air entering the cooling cowl assembly 180 is reduced.

Fig. 2 (c) depicts the bottom view of the vehicle 100, in accordance with the embodiment as depicted in Fig. 1. The first device housing 210 disposed about the discharge pipe 205 and ahead of the muffler 130 is positioned away from the cooling fan inlet 180I. In one implementation, a minimum vertical clearance of 15 mm is maintained between the cooling fan inlet 180I and the device housing 210. Furthermore, the device housing 210 is disposed substantially inward with respect to rear cover assembly 170C of the vehicle 100. Thus, the device housing 210 coming in contact, in lateral direction, with user's foot or so is eliminated and also the device housing 210 is protected from any lateral impacts as the rear cover assembly 170C is substantially outward with respect to the device housing 210.

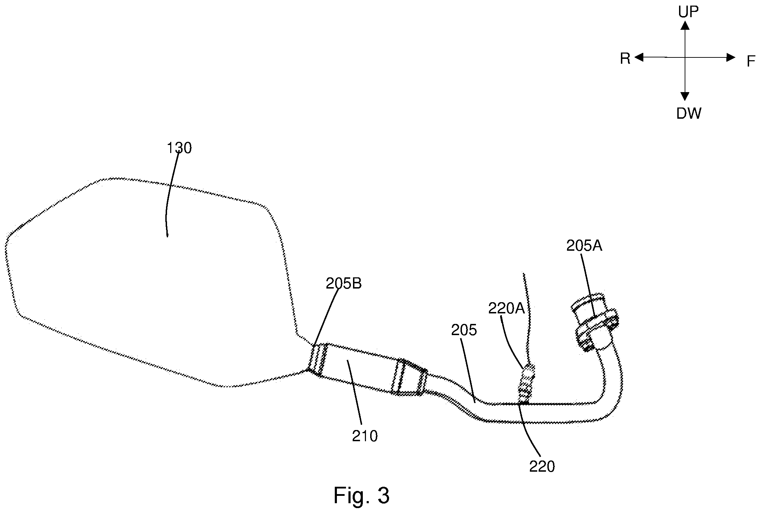

Fig. 3 depicts a schematic view of a discharge system in accordance with another embodiment of the present subject matter. A discharge pipe 205 capable of being connected to the exhaust port of the cylinder 125H through an upstream end portion 205A thereof. A downstream end portion 205B of the exhaust port is connected to the muffler 130. Further, a device housing 210 is disposed about the discharge pipe 205, wherein the device housing 210 is disposed at a distance of at least 6 times the diameter or major cross-sectional dimension of the exhaust port in order to elude any back pressure and ahead of the muffler 130. Further, an gas sensor e.g. oxygen sensor 220A or the like is mounted to the discharge pipe 205 and at a position ahead of the device housing 210. To accommodate the oxygen sensor 220A or the like, the discharge pipe 205 is provided with a port portion 220. In other implementation, the port portion 220 is capable of supporting a SAI connection, an EGR connection, or an additional filter connection thereof. The oxygen sensor 220A mounted to the discharge pipe 205 provides the combustion related information to a control system or the like whereby the air-fuel mixture is altered accordance to the emission and other requirements.

Thus, in the current embodiment, the exhaust gases including harmful components like total hydrocarbons (THC), carbon monoxide (CO), and nitrogen oxides (NOx) are treated by the primary gas treatment device and the secondary gas treatment device. Also, the O2 sensor provides the exhaust gas related information in order to alter the air-fixture mixture. At the same time, the discharge pipe 205 provides sufficient volume ahead of the device housing 210 for the exhaust gases dissipated from the engine 125 thereby eluding back pressure. Additionally, the device housing 210 disposed at the downstream end portion of the discharge pipe 205 provides early light-off thereby being capable of treating exhaust gases during cold start or immediately after start of the engine.

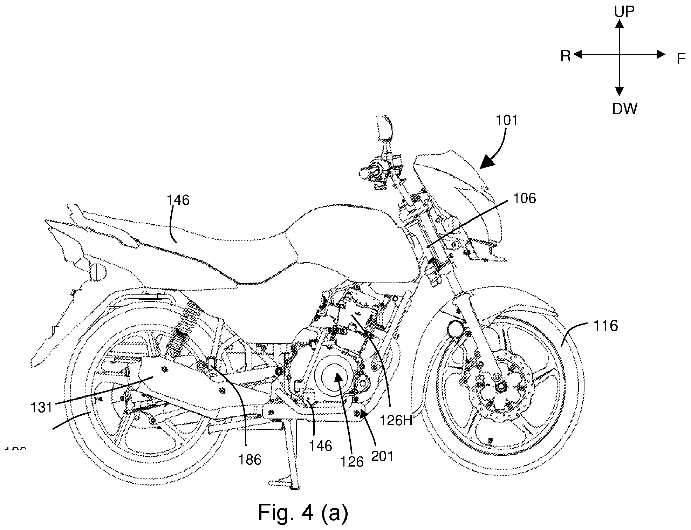

In yet another embodiment (not shown), the engine is fixedly mounted to the vehicle, which is a motorcycle type vehicle. Fig. 4 (a) depicts a right side view of the vehicle, in accordance with yet another embodiment of the present subject matter. In such vehicle 101, the engine 126 is fixedly mounted to the frame member 106 and is disposed rearward to the front wheel 116. Further, the engine 126 includes a cylinder head 126H is forwardly inclined and the cylinder head 126H has intake port at a rearward side wall thereof and an exhaust port is disposed at a front facing side wall. The muffler 131 is disposed on at least one lateral side adjacent to the rear wheel 136, which in the depicted embodiment is the right side. In one embodiment, the muffler 131 is disposed either ahead of the rear wheel or below the engine or between a seat assembly 146 and the rear wheel 136.

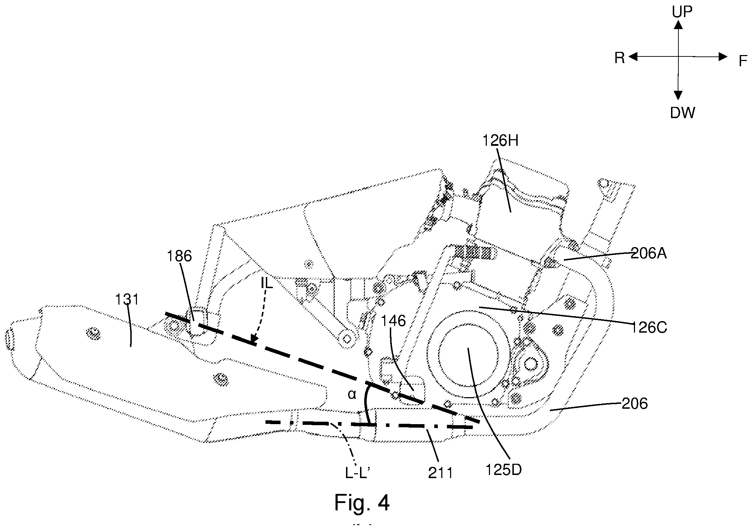

Fig. 4 (b) depicts another enlarged view of the discharge system, in accordance with the embodiment of Fig. 4 (a). The discharge pipe 206 extends from front portion of the cylinder head 126H towards the muffler 131, which is preferably disposed on one lateral side of the vehicle. In the present embodiment, the discharge pipe 206 extends from below the rider foot rest 146 and towards the front portion of the muffler 131. A device housing 211 capable of accommodating a gas treatment device is disposed along at least a portion of the exhaust pipe 206 and at a distance of at least 6 times the diameter or major cross sectional dimension of the exhaust port from the exhaust port. This provides the early light off to the primary gas treatment device at the same time eludes any back.

In a preferred implementation, the device housing 211 is having a long axis L-L' disposed at a pre-determined angle with an imaginary line IL passing through a rider footrest 146 and a pillion footrest 186 of the motor vehicle 101. For example, in the depicted device housing 211, which is having a cylindrical shape, is having a long axis that is the same as the axis of the device housing 211. The imaginary line IL is diverging from the long axis L-L' of the device housing 211 when moving from front portion towards rear portion of the vehicle 101. In a preferred implementation, the angle α between the imaginary line IL and the axis X-X' is an acute angle in the range of 0 - 60 degrees. Further, during operation of the vehicle 101 the heat discharged from the device housing 211 passing rearward does not affect pillion foot resting on the pillion foot rest 186 whereby the foot rest 186 even though disposed rearward to the device housing 210 is substantially away from the heat as the imaginary line passing through the pillion foot rest 186 is diverging away from the foot rest 186. Further, the device housing 211 is disposed at a distance being more than 10 times the diameter or major cross sectional dimension of the exhaust port diameter from the exhaust port. Especially, in motorcycle type vehicle, the discharge pipe passes from below the rider and the pillion foot rests 146, 186. The present subject matter provides the device housing 211 disposed at the downstream end portion of the discharge pipe 206 and preferably ahead of the muffler 131. Thus, the device housing 211 is extending rearward away from the rider foot rest whereby heat generated due to exothermic reaction by the gas treatment device is directed rearward during the operation of the vehicle 101 thereby keeping rider foot safe from heat. Further, the device housing 211 is substantially positioned downward of the IC engine 125 and rearward to a crankcase cover 125D whereby the heat from the primary gas treatment device does not affect the cooling of the IC engine. Further, the heat from the gas treatment device is directed away from the cooling system of the vehicle 101.

## Claims

1. A discharge system (200, 201) for a motor vehicle (100, 101), the motor vehicle (100, 101) comprises an internal combustion (IC) engine (125, 126) connected to a frame member (105, 106) of said motor vehicle (105, 106), the discharge system (200, 201) comprising:
a discharge pipe (205, 206), the discharge pipe (205, 206) includes an upstream portion (205A, 206A), the upstream portion (205A, 206A) being connected to an exhaust port (125E) of the IC engine (125, 126); and
a muffler (130, 131), the muffler (130, 131) being connected to a downstream portion of the discharge pipe (205, 206);
the discharge pipe (205, 206) being provided with a device housing (210, 211), the device housing (210, 211) being capable of accommodating a gas treatment device (210C) disposed therein,
the discharge system (200, 201) being **characterised in that** the gas treatment device (210C) is disposed at a distance of at least six times a port diameter or major cross sectional dimension of the exhaust port (125E).

2. The discharge system (200, 201) for the motor vehicle (100, 101) as claimed in claim 1, wherein the device housing (210, 211) includes an axis (L-L'), the device housing (210, 211) being disposed at a pre-determined angle (α) with respect to an imaginary line (IL) passing through a rider footrest (145, 146) and a pillion footrest (185, 186) of the motor vehicle (100, 101).

3. The discharge system (200, 201) for the motor vehicle (100, 101) as claimed in claim 1, wherein the device housing (210, 211) extending rearward with respect to a rider footrest (145, 146).

4. The discharge system (200, 201) for the motor vehicle (100) as claimed in claim 1, wherein the IC engine (125) comprises a cooling cowl (180), the cooling cowl (180) enclosing at least a portion thereof and the cooling cowl (180) comprises a cooling fan inlet (180I), the cooling fan inlet (180I) being disposed on one lateral side (RH, LH) thereof, the device housing (210) being disposed downwardly rearward to said cooling fan inlet (180I), and wherein the cooling cowl (180) comprises a cooling fan, the cooling fan being functionally connected to a crankshaft of said IC engine (125) and the cooling fan being rotatable about a fan axis, the device housing (210) being disposed rearward to the fan axis.

5. The discharge system (200, 201) for the motor vehicle (101) as claimed in claim 1, wherein the IC engine (126) comprises a crankcase (126C) and a cover (125D), the cover (125D) being disposed on lateral side of said crankcase (126C) and the device housing (211) being disposeddownwardly rearward to the cover (125D).

6. The discharge system (200, 201) for the motor vehicle (100, 101) as claimed in claim 2, wherein said imaginary line (IL) passing through said pillion foot rest (185, 186) being diverging from a axis (X-X') when moving from a front towards rear portion of the motor vehicle (100, 101).

7. The discharge system (200, 201) for the motor vehicle (100, 101) as claimed in claim 1, wherein said discharge pipe (205) comprises a port portion (220), the port portion (220) being disposed ahead of the device housing (210).

8. The discharge system (200, 201) for the motor vehicle (100, 101) as claimed in claim 6, wherein said gas treatment device (210C) being disposed adjacent to said rear wheel (135), the gas treatment device (210C) being connected to said exhaust port (125E) through the discharge pipe (205), said gas treatment device (210C) being disposed substantially rearward to a toggle link (150).

9. The discharge system (200, 201) for the motor vehicle (100, 101) as claimed in claim 1, wherein the gas treatment device (210C) and a secondary gas treatment device (215) being disposed along anaxis X-X' that is along the direction of flow of the exhaust gas from the discharge pipe (205) to the muffler (130).

10. The discharge system (200, 201) for the motor vehicle (100, 101) as claimed in claim 4, wherein a minimum vertical clearance of 15 mm being maintained between the cooling fan inlet (1801) and the device housing (210).

## Patentansprüche

1. Auslasssystem (200, 201) für ein Kraftfahrzeug (100, 101), wobei das Kraftfahrzeug (100, 101) einen Verbrennungsmotor (125, 126) umfasst, der mit einem Rahmenelement (105, 106) des Kraftfahrzeugs (105, 106) verbunden ist, wobei das Ausstoßsystem (200, 201) umfasst:
ein Auslassrohr (205, 206), wobei das Auslassrohr (205, 206) einen stromaufwärtigen Abschnitt (205A, 206A) aufweist, wobei der stromaufwärtige Abschnitt (205A, 206A) mit einer Auslassöffnung (125E) des Verbrennungsmotors (125, 126) verbunden ist; und
einen Schalldämpfer (130, 131), wobei der Schalldämpfer (130, 131) mit einem stromabwärtigen Abschnitt des Auslassrohrs (205, 206) verbunden ist;
das Auslassrohr (205, 206) mit einem Vorrichtungsgehäuse (210, 211) versehen ist, wobei das Vorrichtungsgehäuse (210, 211) in der Lage ist, eine darin angeordnete Gasbehandlungsvorrichtung (210C) aufzunehmen, wobei das Auslasssystem (200, 201) **dadurch gekennzeichnet ist, dass** die Gasbehandlungsvorrichtung (210C) in einem Abstand von mindestens dem Sechsfachen eines Öffnungsdurchmessers oder einer Hauptquerschnittsabmessung der Auslassöffnung (125E) angeordnet ist.

2. Auslasssystem (200, 201) für das Kraftfahrzeug (100, 101) nach Anspruch 1, wobei das Vorrichtungsgehäuse (210, 211) eine Achse (L-L') aufweist, wobei das Vorrichtungsgehäuse (210, 211) in einem vorbestimmten Winkel (α) in Bezug auf eine imaginäre Linie (IL) angeordnet ist, die durch eine Fahrerfußstütze (145, 146) und eine Soziusfußstütze (185, 186) des Kraftfahrzeugs (100, 101) verläuft.

3. Auslasssystem (200, 201) für das Kraftfahrzeug (100, 101) nach Anspruch 1, wobei sich das Vorrichtungsgehäuse (210, 211) in Bezug auf eine Fahrerfußraste (145, 146) nach hinten erstreckt.

4. Auslasssystem (200, 201) für das Kraftfahrzeug (100) nach Anspruch 1, wobei der Verbrennungsmotor (125) eine Kühlhaube (180) aufweist, wobei die Kühlhaube (180) zumindest einen Teil davon umschließt und die Kühlhaube (180) einen Kühllüftereinlass (1801) aufweist, wobei der Kühllüftereinlass (180I) an einer Seite (RH, LH) davon angeordnet ist, das Vorrichtungsgehäuse (210) rückwärtig zu dem Kühllüftereinlass (1801) nach unten angeordnet ist, und wobei die Kühlverkleidung (180) einen Kühllüfter umfasst, wobei der Kühllüfter funktionell mit einer Kurbelwelle des Verbrennungsmotors (125) verbunden ist und der Kühllüfter um eine Lüfterachse drehbar ist, wobei das Vorrichtungsgehäuse (210) rückwärtig zu der Lüfterachse angeordnet ist.

5. Auslasssystem (200, 201) für das Kraftfahrzeug (101) nach Anspruch 1, wobei der Verbrennungsmotor (126) ein Kurbelgehäuse (126C) und eine Abdeckung (125D) umfasst, wobei die Abdeckung (125D) an der Seite des Kurbelgehäuses (126C) angeordnet ist und das Vorrichtungsgehäuse (211) rückwärtig zur Abdeckung (125D) nach unten angeordnet ist.

6. Auslasssystem (200, 201) für das Kraftfahrzeug (100, 101) nach Anspruch 2, wobei die imaginäre Linie (IL), die durch die Soziusfußstütze (185, 186) verläuft, von einer Achse (X-X') abweicht, wenn sie sich von einem vorderen zu einem hinteren Abschnitt des Kraftfahrzeugs (100, 101) bewegt.

7. Auslasssystem (200, 201) für das Kraftfahrzeug (100, 101) nach Anspruch 1, wobei das Auslassrohr (205) einen Öffnungsabschnitt (220) umfasst, wobei der Öffnungsabschnitt (220) vor dem Gerätegehäuse (210) angeordnet ist.

8. Auslasssystem (200, 201) für das Kraftfahrzeug (100, 101) nach Anspruch 6, wobei die Gasbehandlungsvorrichtung (210C) neben dem Hinterrad (135) angeordnet ist, wobei die Gasbehandlungsvorrichtung (210C) durch das Auslassrohr (205) mit der Auslassöffnung (125E) verbunden ist, wobei die Gasbehandlungsvorrichtung (210C) im Wesentlichen rückwärts zu einem Kipphebel (150) angeordnet ist.

9. Auslasssystem (200, 201) für das Kraftfahrzeug (100, 101) nach Anspruch 1, wobei die Gasbehandlungsvorrichtung (210C) und eine sekundäre Gasbehandlungsvorrichtung (215) entlang einer Achse X-X' angeordnet sind, die entlang der Strömungsrichtung des Abgases von dem Auslassrohr (205) zu dem Schalldämpfer (130) verläuft.

10. Auslasssystem (200, 201) für das Kraftfahrzeug (100, 101) nach Anspruch 4, wobei zwischen dem Kühllüftereinlass (180I ) und dem Vorrichtungsgehäuse (210) ein vertikaler Mindestabstand von 15 mm eingehalten wird.

## Revendications

1. Système de décharge (200, 201) pour un véhicule à moteur (100, 101), le véhicule à moteur (100, 101) comprend un moteur à combustion interne (125, 126) relié à un élément de châssis (105, 106) dudit véhicule à moteur (105, 106), le système d'évacuation (200, 201) comprenant :
un tuyau d'évacuation (205, 206), le tuyau d'évacuation (205, 206) comprend une partie amont (205A, 206A), la partie amont (205A, 206A) étant reliée à un orifice d'échappement (125E) du moteur à combustion interne (125, 126) ; et
un silencieux (130, 131), le silencieux (130, 131) étant relié à une partie en aval du tuyau d'évacuation (205, 206) ;
le tuyau d'évacuation (205, 206) est pourvu d'un boîtier de dispositif (210, 211), le boîtier de dispositif (210, 211) pouvant accueillir un dispositif de traitement des gaz (210C) disposé à l'intérieur, le système d'évacuation (200, 201) étant **caractérisé en ce que** le dispositif de traitement des gaz (210C) est disposé à une distance d'au moins six fois un diamètre d'orifice ou une dimension transversale majeure de l'orifice d'échappement (125E).

2. Système de décharge (200, 201) pour le véhicule automobile (100, 101) selon la revendication 1, dans lequel le boîtier du dispositif (210, 211) comprend un axe (L-L'), le boîtier du dispositif (210, 211) étant disposé selon un angle prédéterminé (α) par rapport à une ligne imaginaire (IL) passant par un repose-pieds du conducteur (145, 146) et un repose-pieds du passager (185, 186) du véhicule automobile (100, 101).

3. Système de décharge (200, 201) pour le véhicule à moteur (100, 101) selon la revendication 1, dans lequel le boîtier du dispositif (210, 211) s'étend vers l'arrière par rapport à un repose-pieds du conducteur (145, 146).

4. Système de décharge (200, 201) pour le véhicule à moteur (100) selon la revendication 1, dans lequel le moteur à combustion interne (125) comprend un capot de refroidissement (180), le capot de refroidissement (180) entourant au moins une partie de celui-ci et le capot de refroidissement (180) comprend une entrée de ventilateur de refroidissement (1801), l'entrée de ventilateur de refroidissement (1801) étant disposée sur l'un des côtés latéraux (RH, LH) de celui-ci, le boîtier du dispositif (210) est disposé vers le bas à l'arrière de ladite entrée du ventilateur de refroidissement (1801), et dans lequel le capot de refroidissement (180) comprend un ventilateur de refroidissement, le ventilateur de refroidissement étant fonctionnellement relié à un vilebrequin dudit moteur à combustion interne (125) et le ventilateur de refroidissement étant rotatif autour d'un axe de ventilateur, le boîtier du dispositif (210) étant disposé à l'arrière de l'axe du ventilateur.

5. Système de décharge (200, 201) pour le véhicule automobile (101) selon la revendication 1, dans lequel le moteur IC (126) comprend un carter (126C) et un couvercle (125D), le couvercle (125D) étant disposé sur le côté latéral dudit carter (126C) et le boîtier du dispositif (211) étant disposé vers le bas à l'arrière du couvercle (125D).

6. Système de décharge (200, 201) pour le véhicule à moteur (100, 101) selon la revendication 2, dans lequel ladite ligne imaginaire (IL) passant par ledit repose-pied de passager (185, 186) s'écarte d'un axe (X-X') lorsqu'on se déplace d'une partie avant vers une partie arrière du véhicule à moteur (100, 101).

7. Système de décharge (200, 201) pour le véhicule à moteur (100, 101) selon la revendication 1, dans lequel ledit tuyau de décharge (205) comprend une partie d'orifice (220), la partie d'orifice (220) étant disposée à l'avant du boîtier du dispositif (210).

8. Système de décharge (200, 201) pour le véhicule à moteur (100, 101) selon la revendication 6, dans lequel ledit dispositif de traitement des gaz (210C) est disposé à côté de ladite roue arrière (135), le dispositif de traitement des gaz (210C) étant relié audit orifice d'échappement (125E) par le biais du tuyau de décharge (205), ledit dispositif de traitement des gaz (210C) étant disposé sensiblement à l'arrière d'une liaison à genouillère (150).

9. Système de décharge (200, 201) pour le véhicule à moteur (100, 101) selon la revendication 1, dans lequel le dispositif de traitement des gaz (210C) et un dispositif secondaire de traitement des gaz (215) sont disposés le long d'un axe X-X' qui est le long de la direction d'écoulement des gaz d'échappement depuis le tuyau de décharge (205) jusqu'au silencieux (130).

10. Système de décharge (200, 201) pour le véhicule automobile (100, 101) selon la revendication 4, dans lequel un espace vertical minimum de 15 mm est maintenu entre l'entrée du ventilateur de refroidissement (180I ) et le boîtier du dispositif (210).
